# EUROPÄISCHE PATENTANMELDUNG

(11) **EP 1 759 892 A2**
(43) Veröffentlichungstag der Anmeldung: **07.03.2007**
(21) Anmeldenummer: 06116498.4
(22) Anmeldetag: 03.07.2006
(51) Int. Cl.: B60C 15/06

(54) **Fahrzeugluftreifen und Verfahren zur Herstellung**

(30) Priorität: 03.09.2005 DE 102005041937
(71) Anmelder: Continental Aktiengesellschaft, 30165 Hannover (DE)
(72) Erfinder: Frerichs, Udo, 30855 Langenhagen (DE)

(57) **Zusammenfassung**

Die Erfindung betrifft einen Fahrzeugluftreifen in radialer Bauart mit einem profilierten Laufstreifen (1), einem insbesondere mehrlagigen Gürtel (2), einer Innenschicht (4), einer ein- oder mehrlagigen Karkasseinlage (3), welche in Wulstbereichen um Wulstkerne (5) und Kernprofile (7,8) unter Bildung von Hochschlägen gelegt ist, mit in Seitenwänden (9) eingebrachten, im Querschnitt mondsichelförmigen Verstärkungsprofilen (10), welche jeweils zwischen der Innenschicht (4) und der Karkasseinlage (3) angeordnet sind. Jeder Wulstbereich ist mit einem Kern und einem Kernprofil verstärkt, welches aus wenigstens zwei Kernprofilen (7,8) besteht.

## Beschreibung

Die Erfindung betrifft einen Fahrzeugluftreifen in radialer Bauart mit einem profilierten Laufstreifen, einem insbesondere mehrlagigen Gürtel, einer Innenschicht, einer ein- oder mehrlagigen Karkasseinlage, welche in Wulstbereichen um Wulstkerne und Kernprofile unter Bildung von Hochschlägen gelegt ist, und gegebenenfalls mit in Seitenwänden eingebrachten, im Querschnitt mondsichelförmigen Verstärkungsprofilen, welche jeweils zwischen der Innenschicht und der Karkasseinlage angeordnet sind.

Derartige, im Pannenfall selbsttragende Fahrzeugluftreifen sind in unterschiedlichen Ausführungsformen schon seit längerem bekannt. Die im Bereich der Seitenwände des Reifens eingebauten ringförmig umlaufenden Verstärkungsprofile werden bezüglich ihrer Querschnittsform und bezüglich der Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbstragend zu erhalten.

Ein selbstragender Reifen der eingangs genannten Art ist beispielsweise aus der DE-A-2 331 530 bekannt. Dieser Reifen weist in den Seitenwänden ringförmig umlaufende Elastomer-Verstärkungsprofile auf, welche eine maximale Dicke von 3 % bis 15 % der maximalen Breite des unter Druck aufgeblasenen Reifens aufweisen. Die Verstärkungsprofile sind mondsichelförmig ausgeführt, sodass ihre Dicke allmählich zum Wulstbereich und zur Reifenmittelebene zu abnimmt. Aus der WO 01/43995 A ist ein selbsttragender Reifen bekannt, bei dem in jeder Seitenwand ein Verstärkungsprofil eingebracht ist, welches über seinen Querschnitt aus mehreren Lagen aus einem flexibleren Material und aus mehreren Lagen aus einem steiferen Material besteht. Jedes Verstärkungsprofil ist daher aus einer Vielzahl von im Wesentlichen in Reifenquerrichtung orientierten Schichten zusammengesetzt. Das US Patent Nr. 4,287,924 befasst sich mit einem selbsttragenden Reifen, bei dem pro Seitenwand zwei mondsichelförmig ausgeführte Verstärkungsprofile vorgesehen sind, die jeweils zwischen der Innenschicht und der Karkasseinlage eingebracht sind, wobei das an die Karkasseinlage anschließende Verstärkungsprofil aus einem flexibleren, weicheren Elastomermaterial besteht als jenes, welches an dieses und an die Innenschicht des Reifens angrenzt. Weitere Ausführungsformen von selbstragenden Reifen zeigt das US Patent Nr. 5,526,862. Hier bedeckt das im Bereich jeder Seitenwand zwischen der luftdichten Innenschicht und der Karkasseinlage eingefügte Verstärkungsprofil einseitig einen im Bereich der stärksten Stelle des Verstärkungsprofils eingebrachten elastomeren Kern, dessen andere Seite an die Innenschicht des Reifens anschließt. Der Elastizitätsmodul des elastomeren Materials des Verstärkungsprofils ist niedriger als jener des eingebrachten elastomeren Kerns. Damit soll es möglich sein, dass Verstärkungsprofil aus einem vergleichsweise weichen Material anzufertigen, um den Fahrkomfort des Reifens unter normalen Fahrbedingungen zu verbessern.

Pannenlauffähige Reifen für schwerere und schnellere Personenkraftwagen sowie für sogenannte Sport Utility Vehicles (SUVs), aber auch für Sonderfahrzeuge, wie Krankenwagen, benötigen neben sehr steifen Verstärkungsprofilen in den Seitenwänden auch sehr steife Kernprofile auf entsprechend groß dimensionierten Kernen. Reifen für derartige Einsatzzwecke mit Verstärkungsprofilen in den Seitenwänden benötigen Kernprofile, welche bis zu etwa 75 % der Querschnittshöhe des Reifens reichen und an ihren kernnahen Enden vergleichsweise breit ausgeführt sind. Diese Kernprofile sind in dem üblicher Weise verwendeten Extrusionverfahren schwierig herstellbar, da die extrudierten Profile in den dünnen Abschnitten relativ leicht einreißen. Andere Herstellverfahren, wie beispielsweise das Kalandrieren, das Mold-Injection-Verfahren oder das Spulen von (Gummi)-Streifen, bei dem das Kernprofil direkt auf den Kern aufgebracht wird, sind teuer und aufwändig. Ein weiteres Problem entsteht bei der Handhabung der großvolumigen und steifen Kernprofile beim Reifenaufbau. Beim Umschlag der Karkasseinlagen kommt es im Bereich der Trommelschultern immer wieder zu einem Zurückfedern der vorher angerollten steifen Kernprofile. Dadurch besteht die Gefahr des Entstehens von Lufteinschlüssen und Materialverschiebungen. Auch der Spleiß der sehr steifen Kernprofile lässt sich nur schwer herstellen.

Der Erfindung liegt die Aufgabe zu Grunde, insbesondere für schwerere und schnellere Personenkraftwagen geeignete selbsttragende und damit pannenlauffähige Reifen zur Verfügung zu stellen, deren Kernprofile sich leichter fertigen lassen und deren Handhabung beim Reifenaufbau unproblematisch ist.

Gelöst wird die gestellte Aufgabe erfindungsgemäß mit einem Fahrzeugluftreifen, welcher die Merkmale des Patentanspruchs 1 aufweist.

Anstelle eines voluminösen steifen Kernprofils werden gemäß der Erfindung in jedem Wulstbereich wenigstens zwei Kernprofile eingesetzt, die sich beim Aufbau des Reifens leichter handhaben lassen und auch in der Herstellung einfacher sind. Somit kann ein qualitativ hochwertiger und gemäß einer besonders bevorzugten Ausgestaltung der Erfindung selbsttragender Reifen zur Verfügung gestellt werden.

Das Kernprofil, das in der Fachsprache auch als Apex bezeichnet wird, besteht also aus wenigstens zwei einzelnen Bauteilen, welche als extrudierte Streifen hergestellt und auf der Bautrommel zusammengefügt werden. Dabei weisen die Kernprofile zueinander kongruente Paßflächen auf, welche in praktischen Weiterbildungen der Erfindung keilförmig, gewellt oder gerade verlaufen, wobei die Paßflächen einen Winkel von 30° bis 70°zur Radialen einnehmen, und sich generell über einen relativ langen Bereich erstrecken, um eine sichere Verbindung zu gewährleisten.

Die beiden Kernprofile können aus unterschiedlichen Kautschukmischungen bestehen, wodurch sich gezielt bestimmte Eigenschaften des Reifens einstellen lassen. So kann ein Kernprofil aus einem relativ weichen, und das andere Kernprofil aus einem relativ harten Kautschuk bestehen.

Besonders vorteilhaft kann es sein, wenn das eine Kernprofil ein geringeres Volumen aufweist als das andere Kernprofil.

Von besonderen Vorteil für die Selbsttragefähigkeit des Reifens ist es, wenn die beiden Kernprofile gemeinsam mit dem Verstärkungsprofil einen jede Seitenwand verstärkenden Einbau bilden, welcher, ausgehend vom Wulstkern bis in eine Höhe von 50 % bis 80 % der Querschnittshöhe des Reifens reichend, im Querschnitt zumindest im Wesentlichen konstant dick ausgeführt ist.

Der Aufbau des Reifens mit Kern und zwei Kernprofilen ist auf eine einfache und rationelle Weise möglich. Der Reifen wird auf einer Reifenaufbautrommel aufgebaut, indem nacheinander die Innenschicht, die Verstärkungsprofile und die Karkasseinlage(n) aufgelegt werden. Danach wird entweder zuerst der Kern mit dem vorkonfektionierten ersten Kernprofil an die Trommel angesetzt , wonach diese Profile fest angedrückt oder angerollt werden, wobei anschließend das zweite Kernprofil überlappend auf dem ersten Kernprofil und der Karkasse positioniert und angedrückt werden. Es ist aber auch eine umgekehrte Reihenfolge denkbar, d.h. zunächst ein Aufsetzen des zweiten Kernprofils mit anschließendem An- und Aufsetzen des ersten Kernprofils. Aus Gründen der einfacheren visuellen Kontrolle der Passung wird aber das erst genannte Vorgehen zu bevorzugen sein.

Das Anrollen der Kernprofile im Bereich der Trommelschultern wird dann erleichtert, wenn die Kernprofile entsprechend der oder angenähert an die Rundung der Trommelschultern vorgeformt sind.

Weitere Merkmale, Vorteile und Einzelheiten der Erfindung werden anhand der Zeichnung, die ein Ausführungsbeispiel darstellt, näher beschrieben. Dabei zeigen
Fig. 1 einen Querschnitt durch einen gemäß der Erfindung ausgeführten Radialreifen für Personenkraftwagen,
Fig. 2 ein Stadium während des Aufbaus des in Fig. 1 gezeigten Reifens auf einer Reifenaufbautrommel,
Fig. 3 bis Fig. 5 im Schnitt Ausführungsvarianten von Wulstkernpaketen.

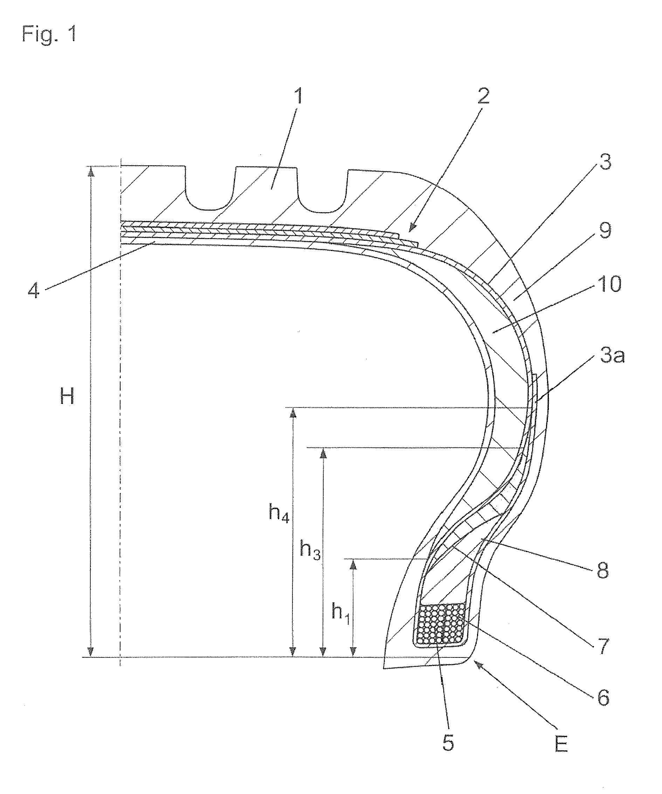

Fig. 1 zeigt einen erfindungsgemäß ausgeführten, selbsttragenden Reifen im Querschnitt. Selbsttragende Reifen sind bei einem Druckverlust im Pannenfall in der Lage, zumindest über eine gewisse Laufleistung soweit tragfähig zu bleiben, dass eine Weiterfahrt möglich ist. Die Zeichnungsfigur zeigt die wesentlichen Bestandteile des Reifens, nämlich einen profilierten Laufstreifen 1, einen hier beispielhaft zweilagig ausgeführten Gürtel 2, eine insbesondere einlagig, bei Reifen mit hoher Tragfähigkeit vorzugsweise zweilagig, ausgeführte Karkasseinlage 3, eine luftdicht bzw. weitgehend luftdicht ausgeführte Innenschicht 4, Wulstbereiche mit jeweils einem Wulstkern 5, welcher aus einer Mehrzahl von Kerndrähten 6 besteht, mit Kernprofilen 7, 8 und Seitenwänden 9. Jede Seitenwand 9 ist mit einem im Querschnitt etwa mondsichelförmigen Verstärkungsprofil 10 verstärkt. Die Lagen des Gürtels 2 können in bekannter Weise aus in eine Gummimischung eingebetteten Festigkeitsträgern, vorzugsweise aus Stahlcord, bestehen, wobei die Stahlcorde in jeder Lage parallel zueinander verlaufen, bezüglich der Stahlcorde in der bzw. den benachbarten Lagen aber gekreuzt angeordnet sind. Dabei schließen die Stahlcorde mit der Reifenumfangsrichtung jeweils einen Winkel von 15 ° bis 30 ° ein.

Die Verstärkungsprofile 10 sind zwischen der Innenschicht 4 und der Karkasseinlage 3 angeordnet und verleihen dem Reifen gemeinsam mit den Kernprofilen 7, 8 bei Druckverlust die Selbsttragefähigkeit, sodass über einen gewissen Zeitraum und bei verminderter Geschwindigkeit eine Weiterfahrt möglich ist. Die Verstärkungsprofile 10 bestehen aus einer sehr steifen, weiterreißfesten Gummimischung mit einer Shore Härte A von etwa 75 und reichen beginnend in einer Höhe h₁ von 15 % bis 25 % der Querschnittshöhe H des Reifens, welche vom Felgeneckpunkt E gemessen wird, bis unter die Endbereiche des Gürtels 2. Ihre größte Dicke, die 10 mm oder mehr betragen kann, weisen die Verstärkungsprofile 10 zwischen 50 % und 80 % der Querschnittshöhe H auf, welche gleichzeitig die Radiale des Fahrzeugreifens darstellt. Die Verstärkungsprofile 10 können auch mehrteilig ausgeführt sein und daher aus unterschiedlichen Gummimischungen bestehen. Werden die Kernprofile 7,8 bei einem Standardreifen ohne Notlauffähigkeit eingesetzt, würden die Verstärkungsprofile entfallen.

Die Karkasseinlage 3 umläuft den Wulstkern 5 und dessen Kernprofile 7, 8 von innen nach außen und ist auf sich selbst rückgeführt, der in Richtung Gürtel 2 zurück verlaufende Abschnitt der Karkasseinlage 3, der Karkasshochschlag 3a, reicht geringfügig über die Kernprofile 7, 8 hinaus.

Das auf dem Wulstkern 5 sitzende Kernprofil 7 reicht vorzugsweise auf eine Höhe h₃, die 30 % bis 60 % der Querschnittshöhe H des Reifens beträgt. Das auf dem Wulstkern 6 positionierte Kernprofil 8 reicht auf eine Höhe h₄, die etwas größer ist als h₃ und bis zu 70 % der Querschnittshöhe H beträgt. Die beiden Kernprofile 7, 8 bestehen aus einer sehr steifen, weiterreißfesten Gummimischung mit einer Shore Härte A von etwa 75.

Jedes Kernprofil 7, 8 kann ferner mehrteilig ausgeführt sein und somit aus unterschiedlichen Gummimischungen bestehen. Es ist ferner denkbar, zwischen den Kernprofilen 7,8 eine festigkeitsverstärkende Gewebeschicht anzuordnen.

Bevorzugt bilden in jeder Seitenwand das Verstärkungsprofil 10 und die beiden Kernprofile 7, 8 gemeinsam einen im Querschnitt über eine gewisse Erstreckung etwa konstant dicken Einbau. Der Abschnitt des Einbaus mit konstanter Dicke reicht beginnend beim Wulstkern 5 auf eine Höhe von 50 % bis 80 % der Querschnittshöhe H.

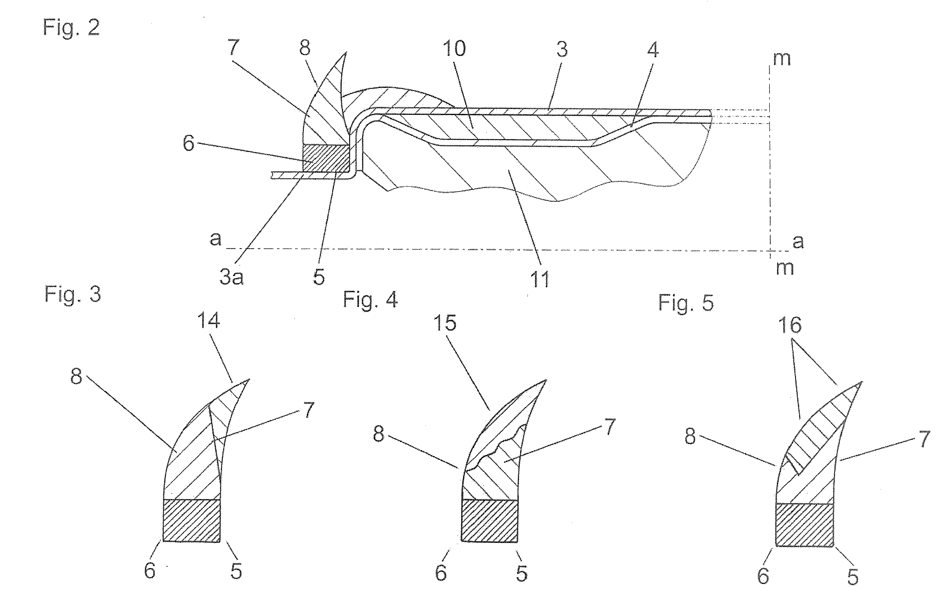

Fig. 2 zeigt eine bevorzugte Möglichkeit der Herstellung eines erfindungsgemäß ausgeführten Reifens auf einer zylindrischen Reifenaufbautrommel 11. Es ist lediglich ein Ausschnitt der Reifenaufbautrommel 11 dargestellt, wobei m-m die Äquatorebene der Trommel 11 und a-a die Rotationsachse der Trommel 11 andeutet. Die Aufbautrommel 11 ist mit über ihre Außenseite umlaufenden Vertiefungen versehen, welche an die Kontur der Verstärkungsprofile 10 angepasst sind. In Fig. 2 ist lediglich eine der Vertiefungen dargestellt. Die Reifenaufbautrommel 11 kann ferner in an sich bekannter Weise über ihren Außenumfang in mehrere Segmente geteilt sein, die in radialer Richtung ein- und ausfahrbar sind.

Der Schulterradius der Aufbautrommel 11 ist relativ klein, damit das Verstärkungsprofil 10 bei fertigem Reifen möglichst nah zu den Kernen 5. 6 liegt.

Zur Herstellung eines erfindungsgemäß ausgeführten Reifens wird zuerst die Innenschicht 4 aufgelegt und in den Vertiefungen 12 positioniert. Die Innenschicht kann dabei eine breite Mischungsbahn sein oder aus einem Kautschukmischungsstreifen durch spiraliges Wickeln desselben aufgebracht werden. Auf die Innenschicht 4 werden in den Vertiefungen 12 nun die Verstärkungsprofile 10 positioniert. Die Außenseiten der Verstärkungsprofile 10 und der Innenschicht 4 bilden eine zumindest im Wesentlichen zylindrische Auflagefläche, auf welche anschließend eine oder zwei Karkasseinlagen unterschiedlicher Breite aufgelegt und gespleißt werden. Wie es bei der Reifenherstellung üblich ist, ist der Wulstkern 5 mitsamt dem unteren Kernprofil 8 als vorgefertigte Kernpakete bereits auf entsprechenden Kernsetzeinrichtungen positioniert und angedrückt oder angerollt worden. Danach wird das Kernprofil 7 auf das Kernprofil 8 der Rundung folgend aufgesetzt und angerollt. Diese Lage ist in Fig. 2 gezeigt.

Die beiden Wulstkerne 5, 6 mitsamt ihren Kernprofilen 7, 8 können auch gemeinsam gesetzt und angerollt werden.

Anschließend wird der Reifen auf herkömmliche Weise fertig aufgebaut, wobei vorerst die Karkasseinlage 3 um die beiden Wulstkerne 5, 6 und die Kernprofile 7, 8 umgeschlagen wird und anschließend die weiteren Reifenbauteile ergänzt werden.

Fig. 3 bis Fig. 5 zeigen Schnitte durch fertige Wulstkernpakete bestehend aus dem Kern 5 und Kernprofilen 7, 8. Die Kernprofile 7, 8 sind gebogen vorgeformt, um weitgehend bereits an die Trommelschulterkontur angepasst zu sein.

Bei der in Fig. 3 gezeigten Ausführung besitzen die Kernprofile 7,8 jeweils eine gerade Paßfläche 12, 13 welche in einem Winkel zur Radialen H verlaufen, der etwa 110 ° beträgt.

Fig. 4 zeigt eine Ausführung, bei der die Kernprofile 7,8 jeweils eine gewellte Paßfläche 14, 15 aufweisen

In Fig. 5 sind weist das Kernprofil 7 einen schrägen Einschnitt 16 auf, in welchen das Kernprofil 8 eingesetzt ist.

## Patentansprüche

1. Fahrzeugluftreifen in radialer Bauart mit einem profilierten Laufstreifen, einem insbesondere mehrlagigen Gürtel, einer Innenschicht, einer ein- oder mehrlagigen Karkasseinlage, welche in Wulstbereichen um Wulstkerne und Kernprofile unter Bildung von Hochschlägen gelegt ist, gegebenenfalls mit in Seitenwänden eingebrachten, im Querschnitt mondsichelförmigen Verstärkungsprofilen, welche jeweils zwischen der Innenschicht und der Karkasseinlage angeordnet sind,
**dadurch gekennzeichnet,**
**dass** jeder Wulstbereich mit einem Kern (5) und einem Kernprofil verstärkt ist, welches aus wenigstens zwei Kernprofilen (7, 8) besteht.

2. Fahrzeugluftreifen nach Anspruch 1, **dadurch gekennzeichnet, dass** die beiden Kernprofile (7, 8) gemeinsam mit dem Verstärkungsprofil (10) einen die jeweilige Seitenwand verstärkenden Einbau bilden, welcher ausgehend vom Wulstkernen (5) bis in eine Höhe von 50 % bis 80 % der Querschnittshöhe (H) des Reifens reichend im Querschnitt zumindest im Wesentlichen konstant dick ausgeführt ist.

3. Fahrzeugluftreifen nach Anspruch 1 oder 2, **dadurch gekennzeichnet, dass** die Kernprofile (7,8) zueinander kongruente Paßflächen aufweisen, welche einen Winkel von 30°bis 70°zur Radialen (H) einnehmen.

4. Fahrzeugluftreifen nach Anspruch 3, **dadurch gekennzeichnet, dass** die Paßflächen keilförmig, gewellt oder gerade verlaufen.

5. Fahrzeugluftreifen nach Anspruch 3, **dadurch gekennzeichnet, dass** die Kernprofile (7,8) aus unterschiedlichen Kautschukmischungen bestehen.

6. Fahrzeugluftreifen nach Anspruch 3, **dadurch gekennzeichnet, dass** ein Kernprofil (7;8) aus einem relativ weichen, und dass das andere Kernprofil (7;8) aus einem relativ harten Kautschuk besteht.

7. Fahrzeugluftreifen nach einem der Ansprüche 1 bis 4, **dadurch gekennzeichnet, dass** das radial weiter innen positionierte Kernprofil (8) maximal bis auf die Höhe des radial weiter außen positionierten Kernprofils (7) reicht.

8. Fahrzeugluftreifen nach einem der Ansprüche 1 bis 5, **dadurch gekennzeichnet, dass** das radial weiter außen positionierte Kernprofil (7) bis auf eine Höhe (h₃) reicht, die bis zu 60 % der Querschnittshöhe (H) des Reifens beträgt.

9. Verfahren zum Aufbau eines Fahrzeugluftreifens nach zumindest einem der Ansprüche 1 bis 8, wobei der Reifen auf einer Reifenaufbautrommel aufgebaut wird, indem nacheinander die Innenschicht, die Verstärkungsprofile und die Karkasseinlage(n) aufgelegt werden,
**dadurch gekennzeichnet,**
**dass** der Kern (5) mitsamt den zugehörigen Kernprofilen (7,8) entweder gemeinsam oder nacheinander gesetzt und die Kernprofile (7, 8) über die Trommelschultern angerollt werden.

10. Verfahren zum Aufbau eines Fahrzeugluftreifens nach zumindest einem der Ansprüche 1 bis 8, wobei der Reifen auf einer Reifenaufbautrommel aufgebaut wird, indem nacheinander die Innenschicht, die Verstärkungsprofile und die Karkasseinlage(n) aufgelegt werden,
**dadurch gekennzeichnet,**
**dass** anschließend zunächst der Kern (5) mitsamt dem zugehörigen Kernprofil (8) auf die Reifenaufbautrommel aufgesetzt und über die Trommelschultern angerollt wird, und dass anschließend das zweite Kernprofil (7) auf das erste Kernprofil (8) aufgelegt und angerollt wird.

11. Verfahren zum Aufbau eines Fahrzeugluftreifens nach zumindest einem der Ansprüche 1 bis 8, wobei der Reifen auf einer Reifenaufbautrommel aufgebaut wird, indem nacheinander die Innenschicht, die Verstärkungsprofile und die Karkasseinlage(n) aufgelegt werden,
**dadurch gekennzeichnet,**
**dass** anschließend zunächst das zweite Kernprofil (7) auf die Reifenaufbautrommel aufgesetzt und über die Trommelschultern angerollt wird, und dass anschließend der Kern (5) mitsamt dem zugehörigen Kernprofil (8) auf das zweite Kernprofil (7) aufgelegt und angerollt wird.

12. Verfahren zum Aufbau eines Fahrzeugluftreifens nach Anspruch 11, **dadurch gekennzeichnet, dass** die Kernprofile (7, 8) entsprechend der oder angenähert an die Rundung der Trommelschultern vorgeformt sind.
